(19) Europäisches Patentamt
European Patent Office
Office européen des brevets

(11) Numéro de publication: **0 478 417 B1**

# (12) FASCICULE DE BREVET EUROPEEN

(45) Date de publication du fascicule du brevet: **15.11.95**

(51) Int. Cl.6: **C07F 17/02**

(21) Numéro de dépôt: **91402473.2**

(22) Date de dépôt: **18.09.91**

## (54) Procédé de synthèse de monohalogénoalkylferrocènes.

(30) Priorité: **27.09.90 FR 9011913**

(43) Date de publication de la demande:
**01.04.92 Bulletin 92/14**

(45) Mention de la délivrance du brevet:
**15.11.95 Bulletin 95/46**

(84) Etats contractants désignés:
**DE GB IT NL SE**

(56) Documents cités:
**EP-A- 0 362 672**

**CHEMICAL ABSTRACTS, vol. 81, no. 3, 1974, page 344, abrégé no. 13631d, Columbus, Ohio, US; P. ELECKO et al.: "Synthesis, proton magnetic resonance spectra, and biological activity of haloacylferrocenes", & CHEM. ZVESTI 1974, 28(1), 94-9**

**CHEMICAL ABSTRACTS, vol. 113, no. 12, 1990, page 146, abrégé no. 99893e, Columbus, Ohio, US;**

(73) Titulaire: **SOCIETE NATIONALE DES POUDRES ET EXPLOSIFS**
**12, quai Henri IV**
**F-75181 Paris Cédex 04 (FR)**

(72) Inventeur: **Gautier, Jean-Claude**
**1, rue Brossolette**
**F-94480 Ablon s/Seine (FR)**
Inventeur: **Melin, Jean-Guy**
**2B, Ruelle de la Gregeotte**
**F-76210 Bolbec (FR)**
Inventeur: **Mondet, Jean-Claude**
**8, Domaine du Guichet**
**F-91810 Vert le Grand (FR)**

(74) Mandataire: **Pech, Bernard et al**
**SNPE - Service Propriété Industrielle**
**12, Ouai Henri IV**
**F-75181 Paris Cédex 04 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 478 417 B1

Rank Xerox (UK) Business Services
(3.10/3.09/3.3.3)

**CHEMICAL ABSTRACTS, vol. 113, 1990, page 521, abrégé no. 180081k, Columbus, Ohio, US; C.F. SHU et al.: "A heterobinuclear cation containing two electroactive centers that "diffuse" through Nafion coatings by different mechanisms", & J. PHYS. CHEM. 1990, 94(21), 8345-50**

**CHEMICAL ABSTRACTS, vol. 80, no. 3, 1974, page 443, abrégé no. 15044t, Columbus, Ohio, US; L.I. KAZAKOVA et al.: "Ionic hydrogenation of acetylferrocenes", & ZH. OBSHCH. KHIM. 1973, 43(7), 1577-80**

**CHEMICAL ABSTRACTS, vol. 114, no. 17, 1991, page 807, abrégé no. 164514u, Columbus, Ohio, US; & JP-A-2 292 293 (IDEMITSU KOSAN CO., LTD) 03-12- 1990**

**CHEMICAL ABSTRACTS, vol. 91, no. 5, 1979, page 558, abrégé no. 38574g, Columbus, Ohio, US; G.D. KOLOMNIKOVA et al.: "Ionic hydrogenation of olefins on heterogeneous catalysts", & IZV. AKAD. NAUK SSSR, SER.**

## Description

La présente invention est relative à un nouveau procédé de synthèse de monohalogénoalkylferrocènes.

Les monohalogénoalkylferrocènes sont notamment utiles comme surfactants ou comme intermédiaires de synthèse de catalyseurs ferrocéniques de comoustion pour propergols, tels que les composés silylferrocènes décrits dans le brevet FR 2 567 980 ou les polymères à insaturations éthyléniques comportant des groupements silylferrocènes décrits dans le brevet FR 2 567 895, par voie magnésienne puis réaction avec un dialkylhalogénosilane.

Le brevet EP 331 745 décrit des monohalogénoalkylferrocènes dont la chaîne alkyle comporte entre 11 et 18 atomes de carbone. Ces composés, utilisés comme surfactants ou intermédiaires de synthèse de surfactants, sont obtenus par réduction chimique (Zn - chlorure mercurique) en milieu éthanol - HCl concentré des monohalogénoalcanoylferrocènes correspondants. Le produit brut obtenu est purifié par traitement chromatographique sur colonne de silice. Le rendement est peu élevé, 75 % environ, et ce procédé présente le double inconvénient de nécessiter des quantités importantes de sel mercurique toxique et de comporter une étape de purification du produit brut de synthèse.

Le brevet EP 362 672, ainsi que les documents CA, vol. 113, 1990, 99893 ; CA, vol. 81, 1974, 13631 ; et CA, vol. 80, 1974, 15044 ; décrivent la synthèse de monohalogénoalkylferrocènes ou d'alkylferrocènes par réduction chimique, via respectivement Zn-Hg, Zn-HCl, $LiALH_4$ et $(C_2H_5)_3$ SiH - $CF_3COOH$, des dérivés alcanoyles correspondants.

Par ailleurs, de façon générale, la mise en oeuvre de réductions chimiques de cétones en hydrocarbures est très délicate au stade industriel.

ROSENBLUM et WODWARD, J.A.C.S., 1958, 80, 5443-5449, décrivent la réduction catalytique du monoacétylferrocène en monoéthylferrocène, à 20 °C, en milieu acide acétique et en présence de $PtO_2$ comme catalyseur (15 g par mole de dérivé ferrocènique). La durée d'hydrogénation, de 70 h, et la quantité précitée du catalyseur trés coûteux, sont prohibitives, notamment au stade industriel. Le rendement, 77 %, est peu élevé. De plus, le produit brut obtenu est très impur et doit subir un double traitement de purification par chromatographie sur colonne d'alumine puis distillation.

A la connaissance de la Demanderesse, il n'existe pas de procédé connu d'hydrogénation catalytique de monohalogénoalcanoylferrocènes en monohalogénoalkylferrocènes correspondants, la difficulté majeure consistant à réduire le groupement carbonyle sans réduire l'halogénure.

MITCHELL et YEE-HING LAI indiquent par exemple dans Tetrahedron Letters, Vol 21, 1980, pages 2637-2638, que

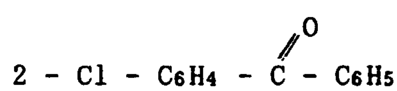

est réduit en $C_6H_5$ - $CH_2$ - $C_6H_5$ par hydrogénation catalytique en présence de nickel de Raney comme catalyseur, donc que le groupement carbonyle et l'halogénure sont tous deux réduits. Par ailleurs, la présence de l'halogène peut également conduire à des réactions parasites indésirables, telles que la formation du dérivé hydroxy correspondant, puis acétoxy si l'on opère en milieu acide acétique.

L'homme du métier est donc à la recherche d'un procédé de réduction catalytique de monohalogénoalcanoylferrocènes en monohalogénoalkylferrocènes correspondants,

- ayant un rendement très élevé,
- de mise en oeuvre industrielle simple et peu coûteuse,
- permettant d'obtenir un produit brut de synthèse de pureté très élevée, dans la mesure où il est très difficile et coûteux de purifier les monohalogénoalkylferrocènes bruts de synthèse obtenus après filtration du catalyseur et évaporation du solvant, notamment ceux dont la chaîne alkyle comporte un nombre élevé d'atomes de carbone,
- présentant un compromis entre la quantité de catalyseur à mettre en jeu, qui conditionne en grande partie le coût de l'hydrogénation, et le temps nécessaire à la réaction, qui conditionne la productivité, le meilleur possible. A cet égard, il ne paraît pas raisonnable que la durée de réaction dépasse 12 h environ et que la quantité de catalyseur noble dépasse 2 g par mole de produit à réduire.

Un objet de la présente invention est de proposer un tel procédé.

De façon inattendue, la Demanderesse a découvert que l'utilisation, en milieu acétique, d'un mélange $PtO_2$ - Sn $Cl_2$ comme catalyseur, permettait d'effectuer l'hydrogénation catalytique des monohalogénoalcanoylferrocènes en monohalogénoalkylferrocènes correspondants, de façon simple et peu coûteuse, avec un

rendement très élevé, en général supérieur ou voisin de 90 %, sans réduction importante de l'halogénure, dans un temps raisonnable de 10 à 12 heures, avec une faible quantité de $PtO_2$, 1,4 g environ de Pt par mole de dérivé ferrocénique à réduire, tout en obtenant un produit brut de synthèse de pureté en général voisine de 95 %, ne nécessitant notamment pas de purification ultérieure pour son utilisation comme intermédiaire de synthèse de catalyseurs ferrocèniques de combustion pour propergols.

Le procédé de synthèse d'un monohalogénoalkylferrocène par réduction d'un monohalogénoalcanoylferrocène est caractérisé, selon l'invention, en ce qu'on fait réagir, dans l'acide acétique, l'hydrogène avec un monohalogénoalcanoylferrocène en présence d'un mélange de $PtO_2$ et de Sn $Cl_2$ comme catalyseur.
De façon préférée, le monohalogénoalcanoylferrocène répond à la formule générale (I)

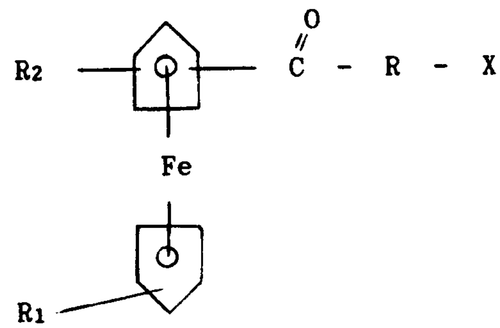

. $R_1$ et $R_2$, identiques ou différents, représentent L'hydrogène ou une chaîne alkyle comportant 1 à 8 atomes de carbone, de préférence l'hydrogène,
. X représente le chlore ou le brome,
. R représente une chaîne alkyle comportant 2 à 47 atomes de carbone, de préférence entre 2 et 17 atomes de carbone et de façon particulièrement préférée entre 2 et 7 atomes de carbone, bornes comprises.

On obtient alors un monohalogénoalkylferrocène répondant à la formule générale (II)

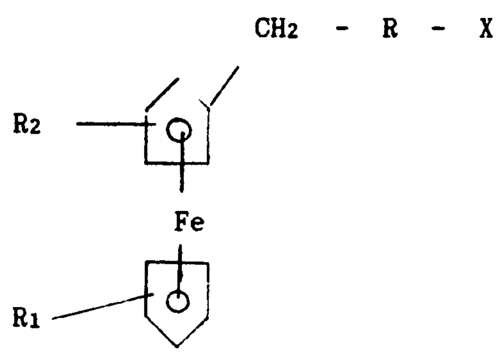

dans laquelle $R_1$, $R_2$, R et X ont la signification précitée.

Selon une variante préférée, R représente un groupement polyméthylène $(CH_2)_n$ dans lequel n est un nombre entier tel que $2 \leqq n \leqq 7$. De préférence n est égal à 3.

Selon l'invention, le catalyseur est un mélange de Pt $O_2$ et de Sn $Cl_2$. De façon préférée, on utilise entre 3 et 7 % en poids de Sn $Cl_2$, exprimés par rapport au poids de platine du Pt O2 utilisé. De façon particulièrement préférée, ce pourcentage est compris entre 3,2 et 4,5 %.

En ce qui concerne Pt $O_2$, on peut utiliser des quantités aussi faibles que 0,2 % en poids par rapport au monohalogénoalcanoylferrocène, exprimé en poids de platine par rapport au poids du monohalogénoalcanoylferrocène.De façon préférée le platine de Pt O2 représente entre 0,2 et 2 % en poids par rapport au monohalogénoalcanoylferrocène, et de façon particulièrement préférée, entre 0,2 et 0,6 % en poids. On obtient ainsi un excellent compromis temps de réaction/quantité de catalyseur.
Des quantités supérieures à 2 % en poids peuvent bien entendu être utilisées mais le compromis est alors moins intéressant malgré un temps de réaction plus bref.

La température de réaction est de préférence comprise entre 15 °C et 45 °C, par exemple la température ambiante, 20 à 25 °C. Au delà de 45 °C, il se produit des réactions parasites, notamment une réduction de l'halogénure en alcool et acétate correspondants, d'autant plus importante que la température

est élevée.

La pression en hydrogène est en général comprise entre 100 et 3 000 KPa. Une pression élevée est favorable à la cinétique de la réaction mais nécessite un matériel et une mise en oeuvre plus complexes. Une pression voisine de 500 KPa constitue un bon compromis.

La réaction d'hydrogénation s'effectuant en milieu hétérogène, il est nécessaire d'agiter le milieu réactionnel.

La concentration du monohalogénoalcanoylferrocène dans l'acide acétique est en général comprise entre 0,1 M et M.

Les exemples non limitatifs suivants illustrent l'invention et les avantages qu'elle procure.

Exemples 1 à 11. Synthèse du chloro - 4 butylferrocène par hydrogénation du chloro - 4 butyroylferrocène.

L'exemple 1 a été réalisé dans un réacteur haute pression de 500 $cm^3$ en acier inoxydable muni d'une double enveloppe reliée à une circulation thermorégulée d'huile. Le mélange réactionnel est contenu dans un bécher en verre inséré dans le réacteur pour éviter tout contact entre ce mélange et la paroi en inox du réacteur. Une sonde de température et un capteur de pression d'hydrogène sont reliés au réacteur. L'agitation est assurée par un agitateur magnétique placé sous le réacteur, un barreau aimanté étant disposé au fond du bécher en verre.

On introduit, sous atmosphère inerte, 170 mg de Pt $O_2$, xH2 O (à 80 % de Pt) et 5 mg de Sn Cl2 anhydre dans le bécher en verre. On coule ensuite 120 $cm^3$ d'acide acétique glacial et 29,1 g (0,10 mol) de chloro - 4 butyroylferrocène dont les principales impuretés sont 1,4 % en poids de ferrocène et 0,88 % en poids de di (chloro - 4 butyroyl) - 1,1′ ferrocène. Ce chloro - 4 butyroylferrocène a été obtenu de façon classique par réaction type Friedel et Crafts entre le ferrocène et le chlorure de l'acide chloro - 4 butyrique, dans $CH_2$ $Cl_2$, en présence d'Al $Cl_3$ comme catalyseur, suivie d'une recristallisation dans l'hexane du produit brut obtenu.

Après sa fermeture et régulation de la température à 25 °C, on purge le réacteur 5 fois par des cycles vide-argon, puis 5 fois par des cycles vide-hydrogène. On amène ensuite la pression d'hydrogène à 500 KPa puis on met en action l'agitation magnétique. On suit la consommation d'hydrogène à l'aide du capteur de pression. On recharge le réacteur en hydrogène en cours d'opération dès que la pression descend en dessous de 350 KPa.

La réaction est terminée au bout de 12 heures.

On filtre alors sous vide le milieu réactionnel puis on évapore le filtrat à l'aide d'un évaporateur rotatif pour éliminer le maximum d'acide acétique. On ajoute alors 200 $cm^3$ de $CH_2$ $Cl_2$ puis on neutralise la phase organique à l'aide de 100 $cm^3$ d'une solution aqueuse à 4 % de $Na_2$ $CO_3$.

Après décantation et séparation, on rince la phase organique à l'eau jusqu'à neutralité, puis on la sèche sur sulfate de magnésium.

Après filtration pour éliminer le sulfate de magnésium et évaporation du solvant, on obtient 26,65 g de chloro - 4 butylferrocène brut (rendement 92,5 %) identifié par spectrométries RMN $^1$H et IR ainsi que par analyse élémentaire. Le taux de fer est 20,4 % (théorie 20,3 %) et le taux de chlore 12,2 % (théorie 12,8 %).

Une analyse par chromatographie en phase gazeuse indique que ce produit brut contient 1,47 % de ferrocène et 0,74 % de di (chloro - 4 butyl) - 1,1' ferrocène.

Une analyse par chromatographie sur couches minces (C.C.M.) indique qu'il contient également 1,45 % d'hydroxy - 4 butylferrocène. par ailleurs, sa teneur en eau est de 0,042 % (Méthode K. Fischer). La pureté de ce produit but est de l'ordre de 96 %.

Les exemples 2 à 11 ont été réalisés selon le même mode opératoire général que celui de l'exemple 1, mais dans un réacteur de taille inférieure (125 $cm^3$) pareillement équipé.

Pour les exemples 2 à 8, on a utilisé 2,91 g (0,01 mol) de chloro - 4 butyroylferrocène, 30 $cm^3$ d'acide acétique et 36,4 mg de Pt $O_2$, x$H_2O$ (à 80 % Pt) soit 1 % en poids de platine par rapport au chloro - 4 butyroylferrocène. La température est de 25 °C et la pression d'hydrogène est comprise entre 400 et 500 KPa. Ces exemples 2 à 8 ne se distinguent que par la quantité de Sn $Cl_2$ utilisé. Le tableau 1 suivant indique, pour chacun de ces exemples, la quantité de Sn $Cl_2$ utilisé, exprimée en % pondéral par rapport à la quantité de platine mise en oeuvre, et le temps de demi-réaction correspondant.

| ex N | Sn Cl2 (%) | Temps de demi-réaction (min) |
|---|---|---|
| 2 | 2,35 | 44 |
| 3 | 2,90 | 36 |
| 4 | 3,40 | 29 |
| 5 | 4,05 | 30 |
| 6 | 5,20 | 38 |
| 7 | 6,70 | 36 |
| 8 | 10,00 | 51 |

Tableau 1

On constate que, de façon inattendue, la quantité de Sn $Cl_2$ passe par un optimum pour une valeur voisine de 3,7 % en poids par rapport au Pt de Pt $O_2$.

Pour les exemples 9 à 11, on a utilisé 2,91 g (0,01 mol) de chloro -4 butyroylferrocène, 30 $cm^3$ d'acide acétique et 10 % en poids de Sn $Cl_2$ par rapport à la quantité de platine mise en oeuvre, différente selon les 3 essais. La température est de 25 °C et la pression d'hydrogène est comprise entre 400 et 500 KPa. Le tableau 2 suivant indique, pour chacun de ces exemples, la quantité de platine utilisé sous forme de Pt $O_2$, $xH_2O$ (à 80 % Pt) exprimée en poids de Pt par rapport au chloro - 4 butyroylferrocène, la durée de la réaction et le rendement en chloro - 4 butylferrocène obtenu.

| ex. N° | Pt (%) | Durée (h) | Rendement (%) |
|---|---|---|---|
| 9 | 3,7 | 2,5 | 92,5 |
| 10 | 1,0 | 4,0 | 95,0 |
| 11 | 0,5 | 10,0 | 93,5 |

Tableau 2

## Revendications

1. Procédé de synthèse d'un monohalogénoalkylferrocène par réduction d'un monohalogénoalcanoylferrocène caractérisé en ce qu'on fait réagir, dans l'acide acétique, l'hydrogène avec un monohalogénoalcanoylferrocèneen présence d'un mélange de $PtO_2$ et de $SnCl_2$ comme catalyseur.

2. Procédé selon la revendication 1 caractérisé en ce que le monohalogénoalcanoylferrocène répond à la formule générale (I)

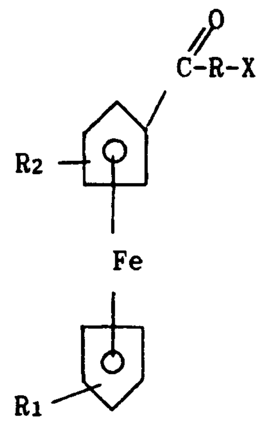

dans laquelle

. R1 et R2, identiques ou différents, représentent l'hydrogène ou une chaine alkyle comportant 1 à 8 atomes de carbone,
. X représente le chlore ou le brome,
. R représente une chaine alkyle, comportant 2 à 47 atomes de carbone,

et le monohalogénoalkylferrocène répond à la formule générale (II)

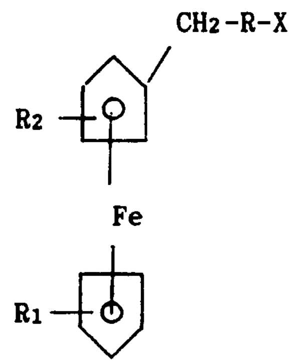

dans laquelle R1, R2, X et R ont la signification précitée.

**3.** Procédé selon la revendication 2 caractérisé en ce que R est un groupement $(CH_2)n$ dans lequel n est un nombre entier tel que $2 \leqq n \leqq 7$, de préférence 3.

**4.** Procédé selon l'une quelconque des revendications 2 et 3 caractérisé en ce que $R_1$ et $R_2$ représentent l'hydrogène.

**5.** Procédé selon l'une quelconque des revendications précédentes caractérisé en ce que la quantité de $SnCl_2$ représente, en poids, entre 3 % et 7 % du poids en Pt de $PtO_2$, de préférence entre 3,2 et 4,5 % en poids.

**6.** Procédé selon l'une quelconque des revendications précédentes caractérisé en ce que la quantité de $PtO_2$ exprimée en poids de platine représente entre 0,2 % et 2 % du poids du monohalogénoalcanoylferrocène, de préférence entre 0,2 et 0,6 % en poids.

**7.** Procédé selon l'une quelconque des revendications précédentes caractérisé en ce que la température de réaction est comprise entre 15 ° C et 45 ° C.

## Claims

**1.** Process for the synthesis of a monohaloalkylferrocene by reduction of a monohaloalkanoylferrocene, characterized in that hydrogen is reacted with a monohaloalkanoylferrocene in acetic acid in the

presence of a mixture of $PtO_2$ and $SnCl_2$ as catalyst.

**2.** Process according to Claim 1, characterized in that the monohaloalkanoylferrocene has the general formula (I)

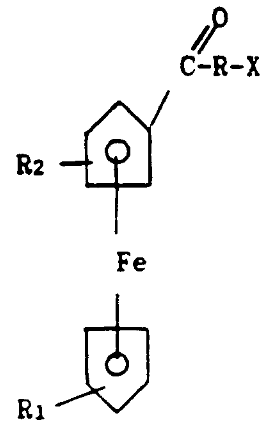

in which
$R_1$ and $R_2$, which are identical or different, represent hydrogen or an alkyl chain containing 1 to 8 carbon atoms,
X represents chlorine or bromine,
R represents an alkyl chain containing 2 to 47 carbon atoms,
and the monohaloalkylferrocene has the general formula (II)

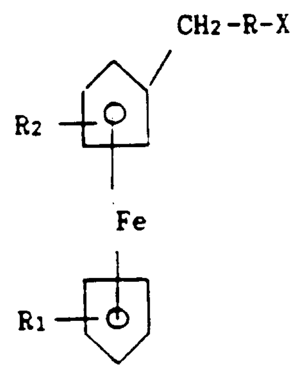

in which $R_1$, $R_2$, X and R have the meaning given above.

**3.** Process according to Claim 2, characterized in that R is a group $(CH_2)_n$ in which n is an integer such that $2 \leqq n \leqq 7$, preferably 3.

**4.** Process according to either of Claims 2 and 3, characterized in that $R_1$ and $R_2$ represent hydrogen.

**5.** Process according to any one of the preceding claims, characterized in that the amount of $SnCl_2$ is between 3 % and 7 % by weight of the weight of Pt in $PtO_2$, preferably between 3.2 and 4.5 % by weight.

**6.** Process according to any one of the preceding claims, characterized in that the amount of $PtO_2$ expressed as weight of platinum represents between 0.2 % and 2 % of the weight of the monohaloalkanoylferrocene, preferably between 0.2 and 0.6 % by weight.

**7.** Process according to any one of the preceding claims, characterized in that the reaction temperature is between 15 °C and 45 °C.

## Patentansprüche

1. Verfahren zur Herstellung eines Monohalogenalkylferrocens durch Reduktion eines Monohalogenalkanoylferrocens,
dadurch gekennzeichnet, daß
Wasserstoff mit einem Monohalogenalkanoylferrocen in Essigsäure in Gegenwart eines Gemischs von $PtO_2$ und $SnCl_2$ als Katalysator zur Reaktion gebracht wird.

2. Verfahren nach Anspruch 1, dadurch gekennzeichnet, daß das Monohalogenalkanoylferrocen der allgemeinen Formel (I)

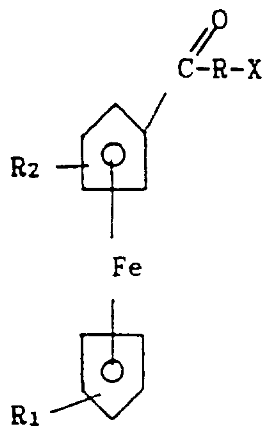

entspricht, in der bedeuten:
- $R_1$ und $R_2$, die gleich oder verschieden sind, Wasserstoff oder eine Alkylgruppe mit 1 bis 8 Kohlenstoffatomen,
- X Chlor oder Brom,
- R eine Alkylgruppe mit 2 bis 47 Kohlenstoffatomen,

und das Monohalogenalkylferrocen der allgemeinen Formel (II)

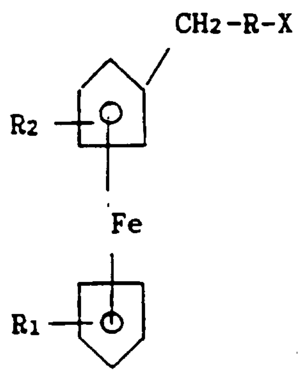

entspricht, in der $R_1$, $R_2$, X und R die obengenannte Bedeutung haben.

3. Verfahren nach Anspruch 2, dadurch gekennzeichnet, daß R eine Gruppe $-(CH_2)_n-$ darstellt, in der n eine ganze Zahl ist, die größer als oder gleich 2 und kleiner als oder gleich 7 und vorzugsweise gleich 3 ist.

4. Verfahren nach einem der Ansprüche 2 und 3, dadurch gekennzeichnet, daß $R_1$ und $R_2$ Wasserstoff darstellen.

5. Verfahren nach einem der vorhergehenden Ansprüche, dadurch gekennzeichnet, daß die Menge an $SnCl_2$, die auf das Gewicht des Platins im verwendeten $PtO_2$ bezogen ist, 3 bis 7 Gew.-%, vorzugsweise 3,2 bis 4,5 Gew.-%, beträgt.

6. Verfahren nach einem der vorhergehenden Ansprüche, dadurch gekennzeichnet, daß die Menge an $PtO_2$, angegeben für das Gewicht des Platins, 0,2 bis 2 Gew.-%, vorzugsweise 0,2 bis 0,6 Gew.-%, bezogen auf das Gewicht des Monohalogenalkanoylferrocens, beträgt.

7. Verfahren nach einem der vorhergehenden Ansprüche, dadurch gekennzeichnet, daß die Reaktionstemperatur 15 bis 45 °C beträgt.